Europäisches Patentamt

European Patent Office

Office européen des brevets

(11) Publication number: **0 317 988 B1**

# EUROPEAN PATENT SPECIFICATION

(45) Date of publication of patent specification: **16.09.92**  (51) Int. Cl.⁵: **B60J 5/04**

(21) Application number: **88119512.7**

(22) Date of filing: **23.11.88**

(54) A process for the assembly of a motor vehicle door and a door obtained by such process.

(30) Priority: **24.11.87 IT 6800687**

(43) Date of publication of application:
**31.05.89 Bulletin 89/22**

(45) Publication of the grant of the patent:
**16.09.92 Bulletin 92/38**

(84) Designated Contracting States:
**DE ES FR GB SE**

(56) References cited:
**US-A- 4 649 668**

(73) Proprietor: **FIAT AUTO S.p.A.**
**Corso Giovanni Agnelli 200**
**I-10135 Torino(IT)**

(72) Inventor: **Scavino, Gianni**
**Via Borgosesia, 90**
**I-10100 Torino(IT)**
Inventor: **Leonardis, Raffaele**
**Corso Unione Sovietica, 409**
**I-10100 Torino(IT)**
Inventor: **Perello, Gian Luigi**
**Via Papa Giovanni XXIII, 19**
**I-10019 Strambino(IT)**

(74) Representative: **Boggio, Luigi et al**
**STUDIO TORTA Società Semplice Via Viotti,**
**9**
**I-10121 Torino(IT)**

## Description

The present invention relates to a process for the assembly of a motor vehicle door, and to a door obtained by such process.

As is known, motor vehicle doors generally comprise a frame defining a window opening having a window glass slidable in a frame opening and operable to close the window. On the inner periphery of the opening in which the window glass is lodged there is mounted a resiliently deformable seal having the dual purpose of sealing against external agents and constituting a guide for sliding of the window glass. In a process of the in-house state of the art, this seal, comprising a relatively rigid core and a soft sealing element adapted to cooperate with the window glass, is mounted manually, before the window glass, to the frame of the vehicle door by screws or by form fitting.

The described process has various disadvantages. First of all, this process is difficult to automate since, before the seal is assembled to the door it is deformable and therefore poorly adapted to be moved by automatic means. Moreover, the fixing operation by means of screws or form fitting is long, onerous and requires a dimensional precision of the components to be connected together, which is difficult to obtain with automatic production cycles.

The object of the present invention is to determine a process for the assemby of a motor vehicle door, which will be free from the disadvantages associated with known processes specified above, as well as to produce a door according to said process.

According to the present invention, said object is achieved by a process for assembling a motor vehicle door of the type comprising a frame including a region defined by a perimetral seat of said frame, said region being provided with an aperture defining a window opening, a transparent sheet having lateral and upper edges and being slidable within said region to close or open said window opening, and elastically deformable perimetral seal means interposed between said edges and said perimetral seat, which is characterised by a first stage in which said seal means are preassembled onto said lateral and upper edges in such a way as to project from said transparent sheet with a pair of free end portions, a second stage in which said free end portions are inserted into a pair of substantially rigid guide means, a third stage during which an adhesive material is distributed along said perimetral seat, and a fourth stage in which said transparent sheet, said seal means and said guide means are inserted into said perimetral seat in such a way that said seal means cooperate with said perimetral seat.

The present invention likewise relates to a door for a motor vehicle, of the type comprising a frame including at least one region defined by a perimetral seat on said frame, said region being provided with an aperture defining a window opening, a transparent sheet having lateral and upper edges and being slidable within said region to close or open said window opening, elastically deformable perimetral seal means constituting a sliding guide for said trasparent sheet and interposed between said edges and said perimetral seat, and connecting means for connecting said seal means to said perimetral seat, characterised in that said connecting means include an adhesive material distributed along said perimetral seat for adhesively fixing said seal means.

Further developments in line with claims 1 and 6, directed to the process and the door of the invention respectively, are referred to in the dependent claims.

For a better understanding of the present invention two embodiments are now described, purely by way of non-limitative example, and with reference to the attached drawings, in which;

Figure 1 is a schematic perspective view of a first embodiment of a door according to the present invention shown separated into its elements;

Figure 2 illustrates in section, and on an enlarged scale, a detail of the door of Figure 1;

Figure 3 is a partial cross-sectional view of a second embodiment of a door according to the present invention, shown with its parts separated; and

Figure 4 illustrates in section, and on an enlarged scale, a detail of the door of Figure 3.

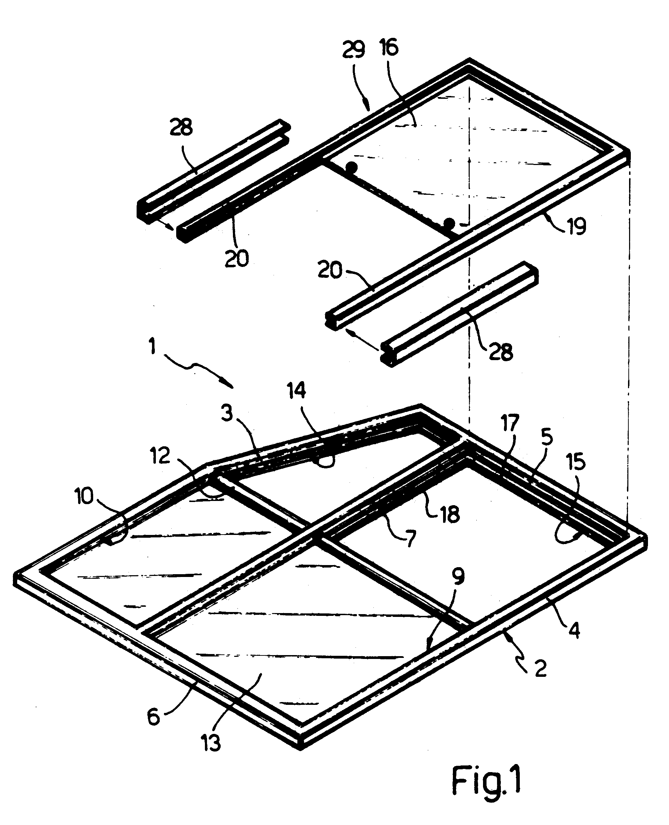

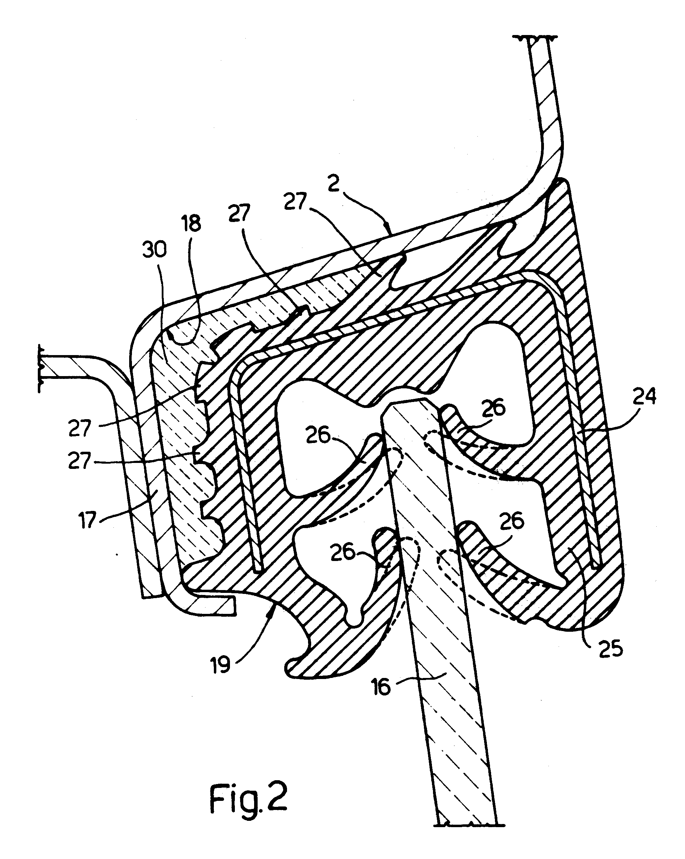

With reference to Figures 1 and 2 a motor vehicle door is generally indicated with the reference numeral 1. The door 1 comprises a frame 2 defined by a pair of, front and rear uprights 3, 4 respectively and upper and lower cross pieces 5, 6 respectively. A further central strut 7 divides the door 1 into a rear part or region 9 and a front part 10; a central cross piece 12 defines in these parts 9, 10, respective lower portions closed on an inner side of the frame 2 by a panel 13, and respective upper apertures 14, 15 constituting the window openings of the door 1. The front window opening 14 has a substantially trapezoidal shape and is closable, in use, by a vent window fixed in a conventional manner to the frame 2; the window opening 15, is of substantially rectangular form, and can be closed in use by a transparent sheet 16 referred to hereinafter for brevity as the "window glass", housed slidably in the region 9.

As is clearly visible in Figure 2, the uprights 4, 7 and the upper cross piece 5 have an inwardly directed shaped abutment 17 defining a perimetral seat 18 which is concave towards the outside of the door 1, in which a resiliently deformable perimetral seal 19 is mounted.

According to the present invention, this seal 19 is preassembled on the upper and lateral edges of the window glass 16 and has a length such that, once preassembly has taken place, two end portions 20 thereof project from the window glass 16.

The seal 19 (Figure 2) comprises a relatively rigid C-section metal core 24 which is embedded in a sealing element 25 made of resiliently deformable soft material, for example rubber, which has a plurality of inwardly directed lips 26 adapted to cooperate with the window glass 16 and to deform flexurally in an elastic manner upon contact therewith. The sealing element 25 further has a plurality of outer projections 27 in the region which faces the seat 18. A pair of substantially C-section channel guide elements 28 are fitted from the outside onto the end portions 20 of the seal 19; the window glass 16, the seal 19 and the channel elements 28 therefore define a substantially rigid assembly 29 which can easily be moved by automatic means.

The door 1 is disposed in a horizontal position as illustrated in Figure 1, with the outer side upwards. Then, using delivery means not illustrated, conveniently of automatic type, a convenient quantity of adhesive material 30 is deposited along the said perimetral seat 18 of the region 9.

The assembly 29 is then lodged and maintained under a certain pressure within the interior of the associated perimetral seat 18 of the region 9 by the said automatic movement means, in such a way that the seal 19 cooperates with the abutment 17 and becomes glued thereto upon solidification of the adhesive material 30 which is distributed between the projections 27 of the seal 19.

The assembly of the door 1 is then completed with the various accessory elements of conventional type such as window winder and lock, and with the fixing of an external cover panel, not illustrated, thus closing the lower portions of the regions 9 and 10.

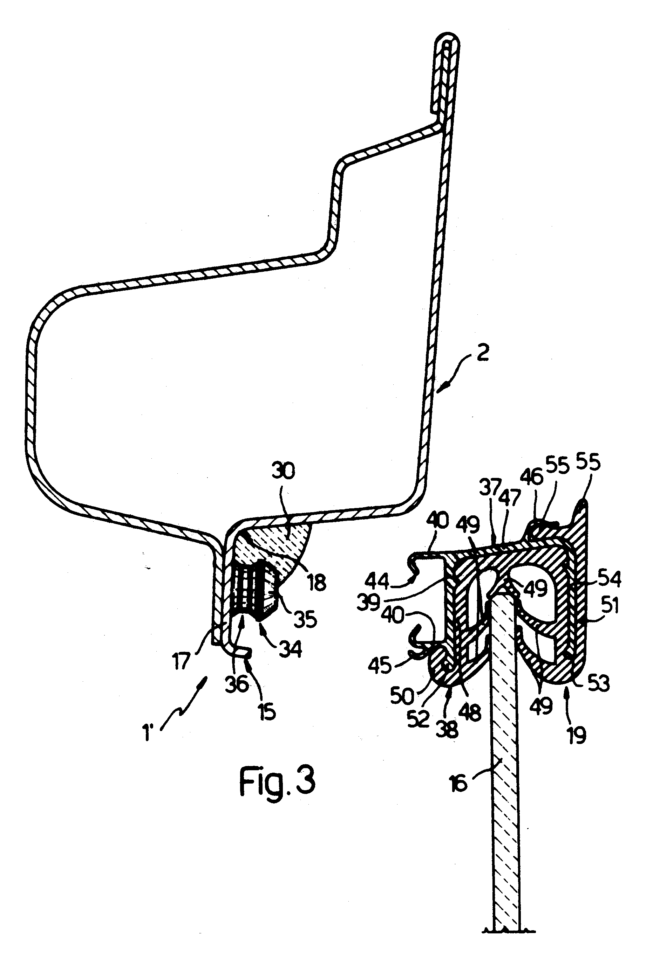

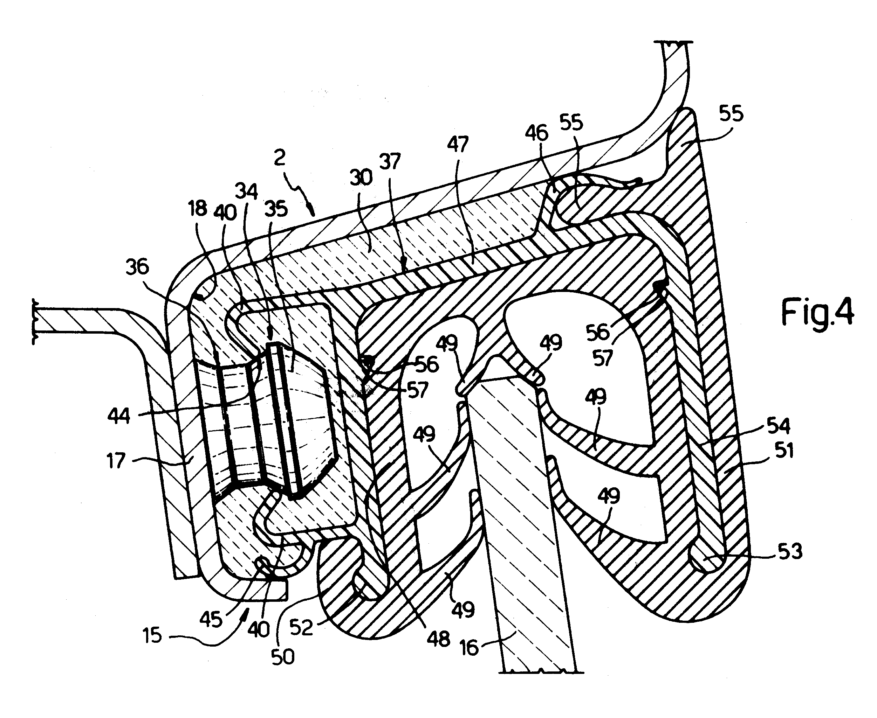

In Figures 3 and 4 there is partially illustrated a door 1' which is described hereinafter only in as much as it differs from the door 1, and utilising the same reference numerals to indicate similar elements to those already described with reference to Figures 1 and 2.

In the case of the door 1', for the purpose of facilitating coupling between the frame 2 of the door 1 and the assembly 29 a plurality of pegs 34 is disposed along the abutment 17, conveniently two for each side, which have an entrance portion 35 and an annular groove 36 of trapezoidal section.

In this case the seal 19 includes a support element 37 constituted by a profile of plastics material, and a seal element 38 of resiliently deformable soft material, for example rubber, which is snap-engaged in a removable manner to the support element 37.

This element 37 has a substantially C-shape section open towards the window glass 16 and has, along its wall 39 facing the abutment 17 a pair of arcuate projections 40 defining a seat 44 for the pegs 34. The element 37 further includes two elastic lips 45, 46 adapted to cooperate with the frame 2 to prevent the escape of the adhesive 30 from the seat 18. These lips 45, 46 are formed respectively along the projection 40 facing inwardly of the window opening 15 and on an outer face 47 of the support element 37.

The sealing element 38 includes a central portion 48 lodged within the support element 37 and provided with lips 49 adapted to cooperate with the window glass 16, and respective inner and outer lateral tongues 50, 51 which pass respectively around a rounded edge 52 of the wall 39 and over an entire side wall 54 of the element 37 opposite the wall 39, also provided with a rounded edge 53.

The tongue 51 has two lips 55 at one end, one of which lips fits under the lip 46 of the support element 37 and the other of which cooperates with the frame 2 of the door.

The central portion 48 of the sealing element 38 has a pair of lateral recesses 56 engaged by respective internal teeth 57 of the lateral walls 39, 54 of the support element 37.

The door 1' is assembled with the same procedure as described for the door 1. The single difference lies in the fact that the pegs 34, which snap-engage in the seats 44 defined by the projections 40, allow a more rapid and precise positioning of the assembly 29 on the frame 2 of the door 1', and ensures that this positioning is maintained during the solidification of the adhesive material 30.

From a study of the assembly process according to the present invention and the doors 1 and 1' formed with this process, the advantages obtained thereby are evident. In particular, the assembly process is simple, rapid and, above all, easily achievable with the use of automatic means. The use of adhesive material 30 in place of conventional screws guarantees a perfect sealing, and allows a greater dimensional tolerance on the components since the coupling between the frame 2 and the assembly 29 does not require critical precision conditions.

It is observed that, in the case of the door 1', the sealing element 38 of the seal 19 is removable and can be replaced even after assembly in that only the support element 37 is fixed to the frame 2 by means of the adhesive material 30.

**Claims**

1. A process for assembling a motor vehicle door (1, 1') of the type comprising a frame (2) including a region (9) defined by a perimetral seat (18) on said frame (2), said region (9) being provided with an aperture defining a window opening (15), a transparent sheet (16) having lateral and upper edges and being slidable within said region (9) to close or open said window opening (15), and elastically deformable perimetral seal means (19) interposed between said edges and said perimetral seat (18), characterised by a first stage in which said seal means (19) are preassembled onto said lateral and upper edges in such a way as to project from said transparent sheet (16) with a pair of free end portions (20), a second stage in which said free end portions (20) are inserted into a pair of substantially rigid guide means (28), a third stage during which adhesive material (30) is distributed along said perimetral seat (18), and a fourth stage in which said transparent sheet (16), said seal means (19) and said guide means (28) are inserted into said perimetral seat (18) in such a way that said seal means (19) cooperate with said perimetral seat (18).

2. A process according to Claim 1, characterised in that said third stage takes place comtemporaneously with said first and second stages.

3. A process according to Claim 1 or Claim 2, characterised in that it includes a fifth stage in which said seal means (19) are compressed against an abutment (17) provided along said perimetral seat (18).

4. A process according to any preceding Claim, characterised in that said region (9) faces toward an outer side of said door (1, 1').

5. A process according to any preceding Claim, characterised in that it includes a sixth stage in which an outer panel
adapted to close a portion of said region (9) is assembled onto said frame (2).

6. A door for a motor vehicle, assembled according to the process claimed in any of the claims 1 to 5, of the type comprising a frame (2) including at least one region (9) defined by a perimetral seat (18) on said frame (2), said region (9) being provided with an aperture defining a window opening (15), a transparent sheet (16) having lateral and upper edges and being slidable within said region (9) to close or open said window opening (15), elastically deformable perimetral seal means (19) constituting a sliding guide for said transparent sheet (16) and interposed between said edges and said perimetral seat (18), and connecting means for connecting said sealing means (19) to said perimetral seat (18), characterised in that said connecting means include an adhesive material (30) distributed along said perimetral seat (18) for adhesively fixing said seal means (19).

7. A door according to Claim 6, characterised in that said seal means (19) are provided with a pair of opposite end portions (20) projecting downwardly from said window opening (15); said end portions (20) being housed in a pair of substantially rigid guide means (28).

8. A door according to Claim 6 or Claim 7, characterised in that said seal means (19) include a support element (24, 37) and a seal element (25, 38) adapted to cooperate with said transparent sheet (16); said seal element (25, 38) being made of a soft, resiliently deformable material.

9. A door according to Claim 8, characterised in that said support element (24) is a metal core embedded in said seal element (25).

10. A door according to Claim 8, characterised in that said support element (37) is a profile to which said seal element (38) is snap-engaged.

11. A door according to Claim 10, characterised in that said support element (37) is made of a plastic material.

12. A door according to Claim 10 or Claim 11, characterised in that said connecting means include snap-engagement means (34, 44) for relative positioning between said frame (2) and said seal means (19).

13. A door according to Claim 12, characterised in that said perimetral seat (18) is provided with an abutment (17) supporting said adhesive material (30), said snap-engagement means (34, 44) comprising a plurality of pegs (34) disposed along said abutment (17) in correspondence of said window opening (15) and corresponding seats (44) formed on said support element (37) of said seal means (19).

14. A door according to any of Claims from 10 to 13, characterised in that only said support element (37) of said seal means (19) is fixed to said perimetral seat (18), and in that said seal element (38) is removable from said support element (37).

15. A door according to any of Claims from 6 to 14, characterised in that said region (9) faces toward an outer side of said door (1, 1').

16. A door according to any of Claims from 6 to 15, characterised in that an outer panel is fixed onto said frame (2) for closure of a portion of said region (9).

**Patentansprüche**

1. Verfahren zum Zusammenbauen einer Kraftfahrzeugtür (1, 1') des Typs, der einen Rahmen (2) mit einem Bereich (9) aufweist, der durch eine perimetrische Auflagefläche (18) auf dem Rahmen (2) begrenzt wird, wobei dieser Bereich (9) mit einer Öffnung, die eine Fensteröffnung (15) begrenzt, einer transparenten Scheibe (16) mit seitlichen und oberen Kanten, zum Gleiten in dem Bereich (9) zum Öffnen oder Schließen der Fensteröffnung (15) und mit elastischen, verformbaren perimetrischen Dichtungsmitteln (19) versehen ist, die zwischen den Kanten und der perimetrischen Auflagefläche (18) angeordnet sind, gekennzeichnet durch
   - eine erste Stufe, in der die Dichtungsmittel (19) auf den seitlichen und oberen Kanten in der Weise vormontiert werden, daß sie über die transparente Scheibe (16) mit einem Paar freier Endabschnitte (20) überstehen,
   - eine zweite Stufe, in der die freien Endabschnitte (20) in ein Paar im wesentlichen starrer Führungsmittel (28) eingeführt werden,
   - eine dritte Stufe, während derer adhäsives Material (30) entlang der perimetrischen Auflagefläche (18) aufgetragen wird, und
   - eine vierte Stufe, in der die transparente Scheibe (16), die Dichtungsmittel (19) und die Führungsmittel (28) in die perimetrische Auflagefläche (18) so eingeführt werden, daß die Dichtungsmittel (19) mit der perimetrischen Auflagefläche (18) zusammenwirken.

2. Verfahren nach Anspruch 1, dadurch gekennzeichnet, daß die dritte Stufe gleichzeitig mit der ersten und der zweiten Stufe ausgeführt wird.

3. Verfahren nach Anspruch 1 oder 2, dadurch gekennzeichnet, daß es eine fünfte Stufe aufweist, in der die Dichtungsmittel (19) gegen eine Anschlagfläche (17), die entlang der perimetrischen Auflagefläche (18) vorgesehen ist, gepreßt werden.

4. Verfahren nach irgendeinem der vorangehenden Ansprüche, dadurch gekennzeichnet, daß der Bereich (9) zur Außenseite der Tür (1, 1') weist.

5. Verfahren nach irgendeinem der vorangehenden Ansprüche, dadurch gekennzeichnet, daß es eine sechste Stufe einschließt, in der ein äußerer Wandabschnitt, der so ausgelegt ist, daß er einen Abschnitt des Bereichs (9) verschließt, an den Rahmen (2) angebaut wird.

6. Tür für ein Kraftfahrzeug, zusammengebaut gemäß dem Verfahren nach irgendeinem der Ansprüche 1-5, von dem Typ, die einen Rahmen (2) mit mindestens einem Bereich (9) aufweist, der begrenzt wird durch eine perimetrische Auflagefläche (18) auf dem Rahmen (2), wobei dieser Bereich (9) mit einer Öffnung, die eine Fensteröffnung (15) begrenzt, einer transparenten Scheibe (16), die in dem Bereich (9) gleitet, um die Fensteröffnung (15) zu öffnen oder zu schließen, und die seitliche und obere Kanten hat, elastisch verformbaren perimetrischen Dichtungsmitteln (19), die eine Gleitführung für die transparente Scheibe (16) darstellen, und die zwischen den Kanten und der perimetrischen Auflagefläche (18) angeordnet sind, und mit Verbindungsmitteln zum Verbinden der Dichtungsmittel (19) mit der perimetrischen Auflagefläche (18) versehen ist, dadurch gekennzeichnet, daß die Verbindungsmittel ein adhäsives Material (30) aufweisen, das entlang der perimetrischen Auflagefläche (18) zum adhäsiven Fixieren der Dichtungsmittel (19) verteilt ist.

7. Tür nach Anspruch 6, dadurch gekennzeichnet, daß die Dichtungsmittel (19) mit einem Paar gegenüberliegender Endabschnitte (20) versehen sind, die von der Fensteröffnung (15) herab vorstehen, wobei diese Endabschnitte (20) in einem Paar von im wesentlichen starren Führungsmitteln (28) angeordnet sind.

8. Tür nach Anspruch 6 oder 7, dadurch gekennzeichnet, daß die Dichtungsmittel (19) ein Stützelement (24, 37) und ein Dichtungselement (25, 38) aufweisen, das so ausgelegt ist, daß es mit der transparenten Scheibe (16) zusammenwirkt, wobei das Dichtungselement (25, 38) aus einem weichen, elastisch verformbaren Material gefertigt ist.

9. Tür nach Anspruch 8, dadurch gekennzeichnet, daß das Stützelement (24) ein metallischer Kern ist, der in das Dichtungselement (25) eingebettet ist.

10. Tür nach Anspruch 8, dadurch gekennzeichnet, daß das Stützelement (37) ein Profil ist, mit dem das Dichtungselement (38) verrastet ist.

11. Tür nach Anspruch 10, dadurch gekennzeichnet, daß das Stützelement (37) aus Plastikmaterial gefertigt ist.

12. Tür nach Anspruch 10 oder 11, dadurch gekennzeichnet, daß die Verbindungsmittel Schnapp-Rastmittel (34, 44) zum relativen Ausrichten zwischen dem Rahmen (2) und den Dichtungsmitteln (19) aufweisen.

13. Tür nach Anspruch 12, dadurch gekennzeichnet, daß die perimetrische Auflagefläche (18) mit einer Anschlagfläche (17) versehen ist, die das adhäsive Material (30) abstützt, und daß die Schnapp-Rastmittel (34, 44) eine Vielzahl von Druckknöpfen (34), die entlang der Anschlagfläche (17) in bezug auf die Fensteröffnung (15) angeordnet sind, aufweisen und korrespondierende Aufnahmen (44), die an dem Stützelement (37) der Dichtungsmittel (19) angeformt sind.

14. Tür nach irgendeinem der Ansprüche 10-13, dadurch gekennzeichnet, daß nur das Stützelement (37) der Dichtungsmittel (19) an der perimetrischen Auflagefläche (18) befestigt ist, und daß das Dichtungselement (38) lösbar von dem Stützelement (37) ist.

15. Tür nach irgendeinem der Ansprüche 6-14, dadurch gekennzeichnet, daß der Bereich (9) zu einer Außenfläche der Tür (1, 1') weist.

16. Tür nach irgendeinem der Ansprüche 6-15, dadurch gekennzeichnet, daß ein äußerer Wandabschnitt auf dem Rahmen (2) befestigt wird, um einen Teil des Bereichs (9) zu schließen.

**Revendications**

1. Procédé d'assemblage d'une porte (1, 1') de véhicule automobile du type comprenant un cadre (2) comportant une zone (9) définie par un siège périphérique (18) situé sur ledit cadre (2), ladite zone (9) étant pourvue d'une ouverture définissant une ouverture de fenêtre (15), une feuille transparente (16) présentant des bords latéraux et supérieur et étant susceptible de coulisser dans ladite zone (9), pour fermer ou ouvrir ladite ouverture de fenêtre (15), et des moyens d'étanchéité périphériques (19) déformables élastiquement, interposés entre lesdits bords et ledit siège périphérique (18), caractérisé par une première étape dans laquelle lesdits moyens d'étanchéité (19) sont pré-assemblés sur lesdits bords latéraux et supérieur, de manière à faire saillie de ladite feuille transparente (16) avec un couple de parties d'extrémité libre (20), une deuxième étape dans laquelle lesdites parties d'extrémité libre (20) sont insérées dans un couple de moyens de guidage (28) sensiblement rigides, une troisième étape durant laquelle un matériau adhésif (30) est distribué le long dudit siège périphérique (18), et une quatrième étape dans laquelle ladite feuille transparente (16), lesdits moyens d'étanchéité (19) et ledit moyen de guidage (28) sont insérés dans ledit siège périphérique (18), de manière que lesdits moyens d'étanchéité (19) coopèrent avec ledit siège périphérique (18).

2. Procédé selon la revendication 1, caractérisé en ce que ladite troisième étape a lieu simultanément avec lesdites première et deuxième étapes.

3. Procédé selon la revendication 1 ou 2, caractérisé en ce qu'il comprend une cinquième étape dans laquelle lesdits moyens d'étanchéité (19) sont comprimés contre une butée (17) prévue le long dudit siège périphérique (18).

4. Procédé selon l'une quelconque des revendications précédentes, caractérisé en ce que ladite zone (9) fait face à un côté extérieur de ladite porte (1, 1').

5. Procédé selon l'une quelconque des revendications précédentes, caractérisé en ce qu'il comprend une sixième étape dans laquelle un panneau extérieur, adapté pour obturer une partie de ladite zone (9), est monté sur ledit cadre (2).

6. Porte pour un véhicule automobile, assemblée suivant le procédé selon l'une quelconque des revendications 1 à 5, du type comprenant un cadre (2) comportant au moins une zone (9) définie par un siège périphérique (18) situé sur ledit cadre (2), ladite zone (9) étant pourvue d'une ouverture définissant une ouverture de fenêtre (15), une feuille transparente (16) présentant des bords latéraux et supérieur et étant susceptible de coulisser dans ladite zone (9), pour fermer ou ouvrir ladite ouverture de fenêtre (15), et des moyens d'étanchéité périphériques (19) déformables élastiquement, constituant un guide coulissant pour ladite feuille transparente (16) et interposés entre lesdits bords et ledit siège périphérique (18), et un moyen de liaison pour relier lesdits moyens d'étanchéité (19) audit siège périphérique (18), caractérisée en ce que ledit moyen de liaison comprend un matériau adhésif (30), distribué le long dudit siège périphérique (18), pour fixer de manière adhésive lesdits moyens d'étanchéité (19).

7. Porte selon la revendication 6, caractérisée en ce que lesdits moyens d'étanchéité (19) sont pourvus d'un couple de parties d'extrémité opposées (20), faisant saillie vers le bas, depuis ladite ouverture de fenêtre (15), lesdites parties d'extrémité (20) étant logées dans un couple de moyens de guidage (28) sensiblement rigides.

8. Porte selon la revendication 6 ou 7, caractérisée en ce que lesdits moyens d'étanchéité (19) comprennent un élément de support (24, 37) et un élément d'étanchéité (25, 38) adapté pour coopérer avec ladite feuille transparente (16), ledit élément d'étanchéité (25, 38) étant réalisé en un matériau souple et déformable élastiquement.

9. Porte selon la revendication 8, caractérisée en ce que ledit élément de support (24) est un noyau métallique noyé dans ledit élément d'étanchéité (25).

10. Porte selon la revendication 8, caractérisée en ce que ledit élément de support (37) est un profilé sur lequel est encliqueté ledit élément d'étanchéité (38).

11. Porte selon la revendication 10, caractérisée en ce que ledit élément de support (37) est réalisé en un matériau synthétique.

12. Porte selon la revendication 10 ou 11, caractérisée en ce que ledit moyen de liaison comprend des moyens d'encliquetage (34, 44) servant au positionnement relatif entre ledit cadre (2) et lesdits moyens d'étanchéité (19).

13. Porte selon la revendication 12, caractérisée en ce que ledit siège périphérique (18) est pourvu d'une butée (17) supportant ledit matériau adhésif (30), lesdits moyens d'encliquetage (34, 44) comprenant une pluralité de chevilles (34) disposées le long de ladite butée (17) en correspondance de ladite ouverture de fenêtre (15) et des sièges (44) correspondants formés sur ledit élément de support (37) desdits moyens d'étanchéité (19).

14. Porte selon l'une quelconque des revendications 10 à 13, caractérisée en ce que seul ledit élément de support (37) desdits moyens d'étanchéité (19) est fixé audit siège périphérique (18), et en ce que ledit élément d'étanchéité (38) est démontable dudit élément de support (37).

15. Porte selon l'une quelconque des revendications 6 à 14, caractérisée en ce que ladite zone (9) fait face à un côté extérieur de ladite porte (1, 1').

16. Porte selon l'une quelconque des revendications 6 à 15, caractérisée en ce qu'un panneau extérieur est fixé sur ledit cadre (2), pour permettre l'obturation d'une partie de ladite zone (9).

Fig.1

Fig.2

EP 0 317 988 B1

Fig.3

Fig.4